# EUROPÄISCHE PATENTSCHRIFT

(11) **EP 1 195 067 B1**
(45) Veröffentlichungstag und Bekanntmachung des Hinweises auf die Patenterteilung: **18.06.2003**
(21) Anmeldenummer: 00920687.1
(22) Anmeldetag: 11.04.2000
(51) Int. Cl.: H04Q 7/32

(54) **KOMMUNIKATIONSENDGERÄT UND VERFAHREN ZUR KOMPRIMIERUNG UND BZW. ODER DEKOMPRIMIERUNG VON EMPFANGENEN ODER ZU SENDENDEN NACHRICHTEN**
TERMINAL AND METHOD FOR COMPRESSING AND/OR DECOMPRESSING MESSAGES RECEIVED OR TO BE SENT
TERMINAL DE COMMUNICATION ET PROCEDE POUR COMPRIMER ET/OU DECOMPRIMER DES MESSAGES RE US OU A ENVOYER

(30) Priorität: 20.07.1999 EP 99114134
(43) Veröffentlichungstag der Anmeldung: 10.04.2002
(60) Teilanmeldung: 03000736.3
(73) Patentinhaber: SIEMENS AKTIENGESELLSCHAFT, 80333 München (DE)
(72) Erfinder: PUSL, Stefan, D-85406 Zolling (DE); SASSE, Jörg, D-80995 München (DE)
(86) Internationale Anmeldenummer: EP0003235
(87) Internationale Veröffentlichungsnummer: WO01006802

(56) Entgegenhaltungen:
- EP-A- 0 802 694
- EP-A- 0 869 691
- WO-A-97/48212

## Beschreibung

In dem weltweit verbreiteten Mobilfunksystem nach dem GSM-Standard (Global System for Mobile Communication) gibt es die Möglichkeit Textnachrichten zu übertragen. Dies kann sowohl zwischen zwei Teilnehmerendgeräten (Point to Point) oder auch zu einer Vielzahl von Teilnehmerendgeräten (Broadcast Mode) geschehen. Da die Übertragungsrate bzw. die Anzahl der zu übertragenden Zeichen pro Nachricht begrenzt ist, besteht ein Bedürfnis zur Kompression (auch: Komprimierung) der zu übertragenden Textnachrichten.

Der vorliegenden Erfindung liegt die Aufgabe zugrunde, eine technische Lehre anzugeben, mit der die Kompression und Dekompression von Textnachrichten in einer Weise möglich ist, die den besonderen Anforderungen der Übertragung von Textnachrichten über Mobilfunksysteme angemessen ist. Diese Aufgabe wird gemäß der vorliegenden Erfindung durch ein Kommunikationsendgerät nach Anspruch 1 und durch ein Verfahren zur Dekomprimierung einer empfangenen Nachricht in einem Kommunikationsendgerät gemäß Anspruch 4 sowie durch ein Verfahren zur Komprimierung einer zu sendenden Nachricht in einem Kommunikationsendgerät gemäß Anspruch 5 gelöst.

Die erfindungsgemäße Idee basiert dabei auf dem Gedanken, in Mobilfunkendgeräten üblicherweise vorhandene Teilnehmeridentitätsmodule (subscriber identity module, SIM) mit Funktionen zur Komprimierung und bzw. oder Dekomprimierung von empfangenen oder zu sendenden Nachrichten auszustatten. Diese Lösung hat verschiedene Vorteile. Zum einen kann ein Netzbetreiber seinen eigenen Komprimierungs- und Dekomprimierungsalgorithmus verwenden. Zum anderen können bereits im Markt vorhandene Mobilfunkgeräte, die entsprechende Teilnehmeridentitätsmodule unterstützen, durch die Verwendung eines neuen Teilnehmeridentitätsmoduls oder aber durch Umkonfiguration eines vorhandenen Teilnehmeridentitätsmoduls um das beschriebene Funktionsmerkmal erweitert werden.

Die Druckschrift WO-A-97/48212 befaßt sich zwar auch schon mit der o.a. Aufgabe, löst diese aber durch ein aufwendigeres Herunterladen der Komprimierungssoftware vom Netzwerk.

Vorteilhafte Weiterbildungen der Erfindung sind Gegenstand untergeordneter Patentansprüche.

Im folgenden wird die Erfindung anhand bevorzugter Ausführungsbeispiele und mit Hilfe einer Figur näher beschrieben.

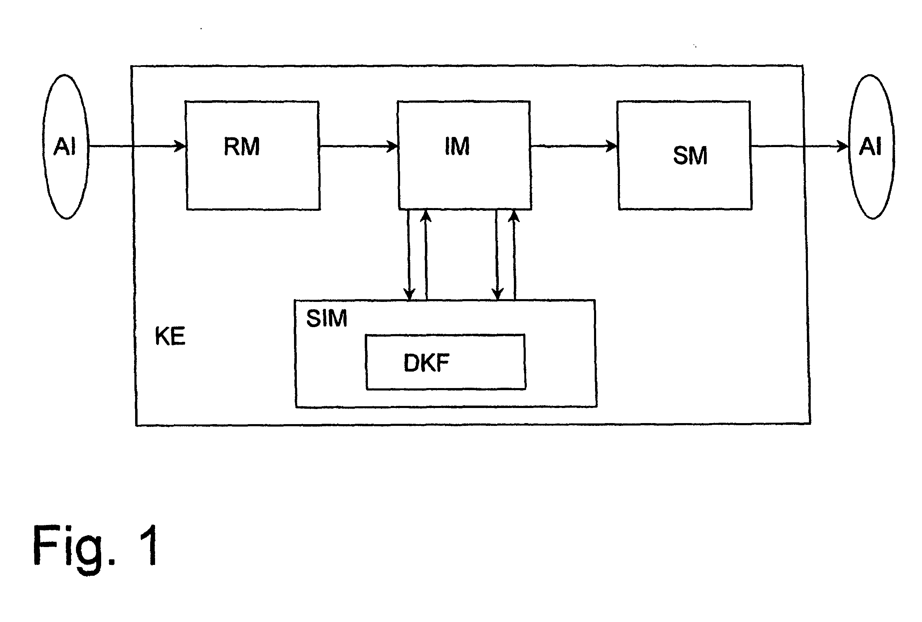

Figur 1 zeigt eine schematische Darstellung eines Kommunikationsendgerätes (KE) gemäß der vorliegenden Erfindung. Dieses Kommunikationsendgerät umfaßt Mittel zum Empfang (RM) und zum Senden (SM) von Nachrichten und Mittel (IM) zur Interaktion mit einem durch einen Benutzer austauschbaren Teilnehmeridentitätsmodul (SIM). Dabei umfaßt das Teilnehmeridentitätsmodul Funktionen (DKF) zur Komprimierung und Dekomprimierung von empfangenen oder zu sendenden Nachrichten. Die Nachrichten werden über eine sogenannte Luftschnittstelle (AI) empfangen oder gesendet.

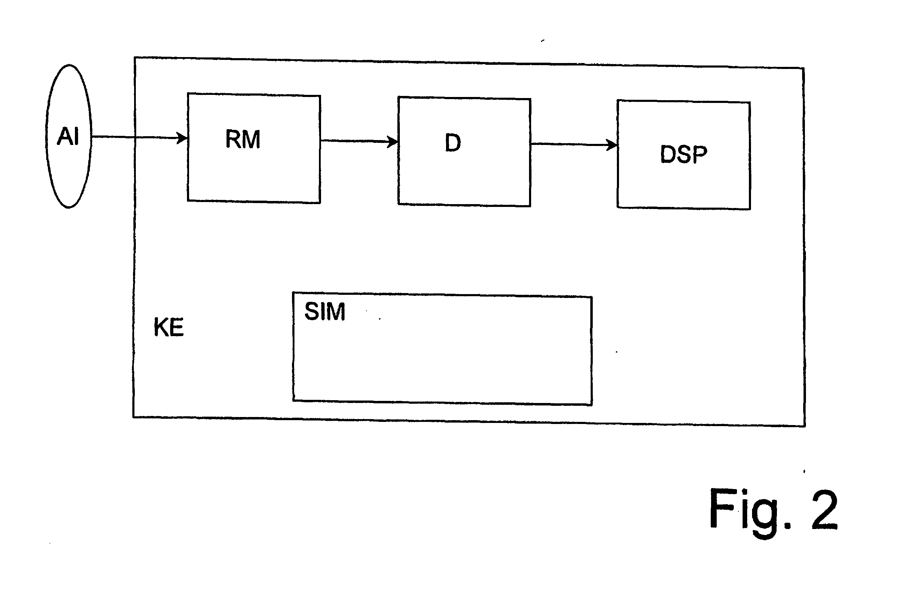

Figur 2 zeigt in schematischer Weise den Ablauf der Dekomprimierung auf herkömmliche Weise (Stand der Technik).

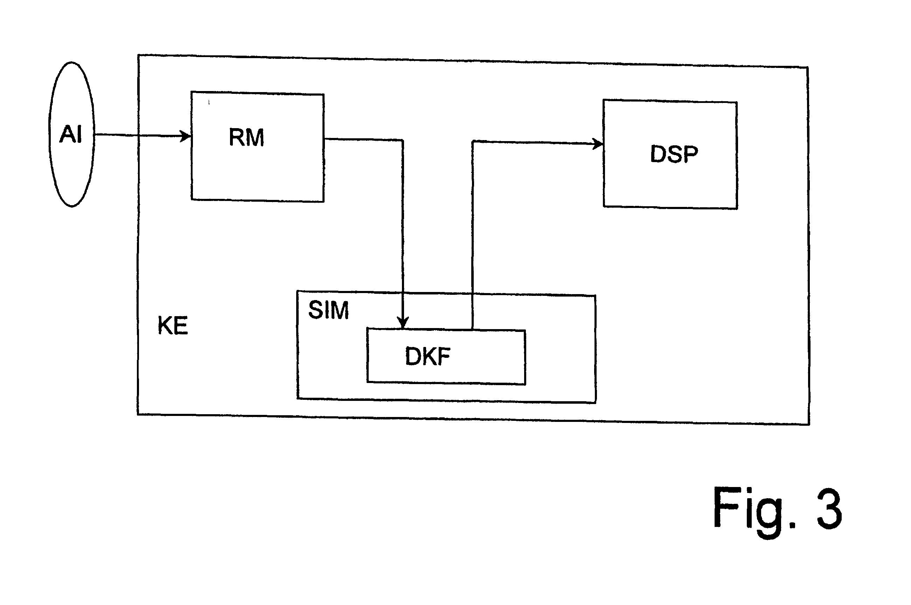

Figur 3 zeigt in schematischer Weise den Ablauf der Dekomprimierung gemäß der vorliegenden Erfindung.

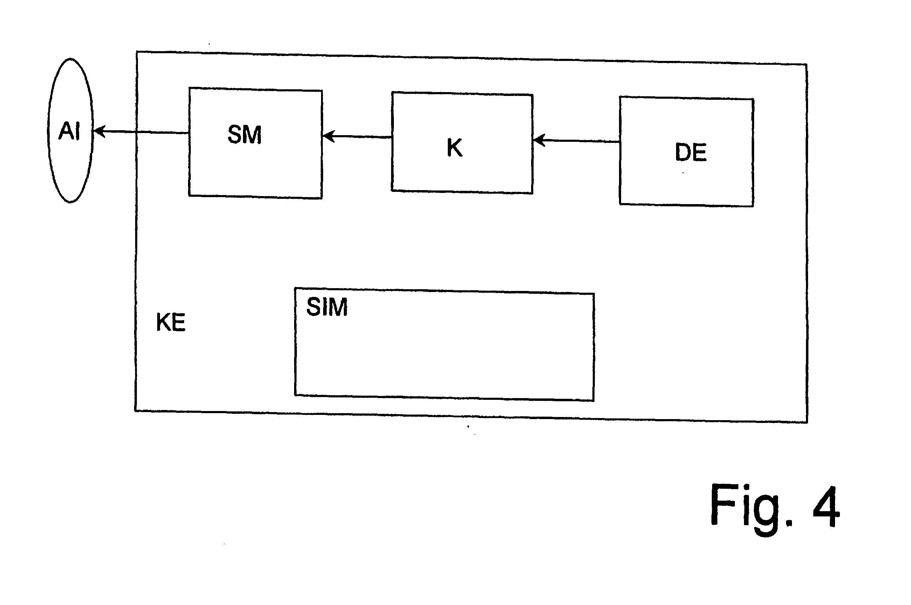

Figur 4 zeigt in schematischer Weise den Ablauf der Komprimierung auf herkömmliche Weise (Stand der Technik).

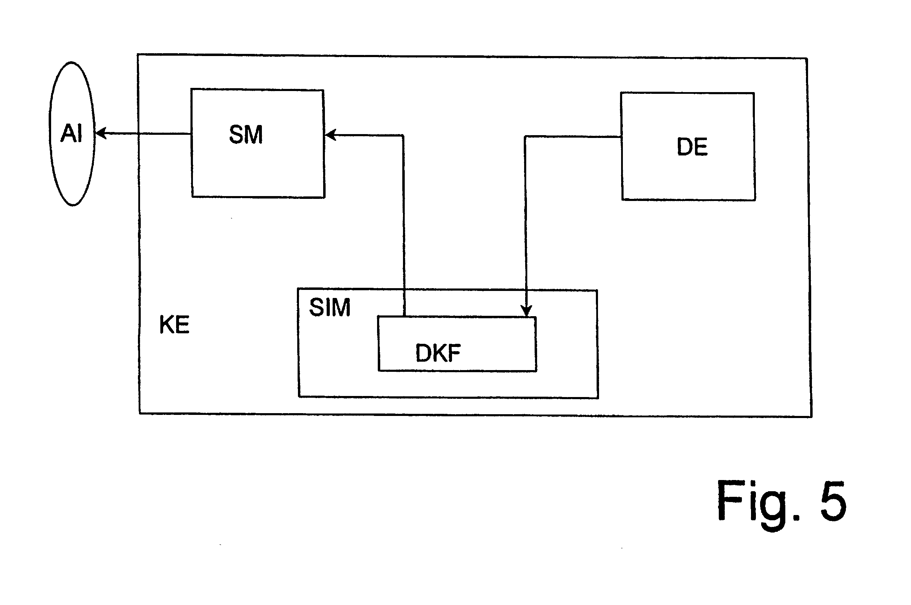

Figur 5 zeigt in schematischer Weise den Ablauf der Komprimierung gemäß der vorliegenden Erfindung

Im folgenden wird die Erfindung mit Hilfe bevorzugter Ausführungsbeispiele und anhand der Figuren näher beschrieben.

Gemäß eines bevorzugten Ausführungsbeispieles der vorliegenden Erfindung sind die Funktionen zur Komprimierung und Dekomprimierung von empfangenen oder zu sendenden Nachrichten zwischen dem Endgerät und dem Teilnehmeridentitätsmodul in einer Weise aufgeteilt, daß zwei unterschiedliche Teilnehmeridentitätsmodule (SIM) in Verbindung mit demselben Endgerät die Ausführung zweier unterschiedlicher Verfahren zur Komprimierung und Dekomprimierung von Nachrichten ermöglichen können.

Gemäß einer weiteren bevorzugten Ausführungsform der Erfindung sind sämtliche Funktionen zur Komprimierung und Dekomprimierung von empfangenen oder zu sendenden Nachrichten durch Einrichtung oder Softwareobjekte realisiert, die dem Teilnehmeridentitätsmodul (SIM) und nicht dem Endgerät zugeordnet sind.

Bei einem Verfahren zur Dekomprimierung einer empfangenen Nachricht in einem Kommunikationsendgerät gemäß der vorliegenden Erfindung, erkennt eine Einrichtung des Endgerätes anhand eines Merkmales dieser Nachricht (z.B. sog. Message-Header), daß es sich um eine komprimierte Nachricht handelt. Dieselbe Einrichtung oder eine weitere Einrichtung des Endgerätes gibt daraufhin diese Nachricht an das Teilnehmeridentitätsmodul zur Dekomprimierung weiter.

Bei der Komprimierung einer zu sendenden Nachricht in einem Kommunikationsendgerät gemäß der vorliegenden Erfindung wird eine zu sendende Nachricht zur Komprimierung an das Teilnehmeridentitätsmodul weitergegeben und dort mit Hilfe von Funktionen, die dem Teilnehmeridentitätsmodul zugeordnet sind komprimiert und nach der Komprimierung an das Endgerät zum Senden zurückgegeben.

Durch die vorliegende Erfindung wird der Algorithmus zum Komprimieren bzw. Dekomprimieren auf dem sogenannten Teilnehmeridentitätsmodul ausgeführt, welcher auch als Subscriber-Identity-Modul (SIM) bzeichnet wird und in der Regel als Chipkarte realisiert ist. Die empfangenen Textnachrichten werden zum SIM geleitet, die selbständig erkennt, ob die Nachricht komprimiert ist und falls ja, diese entsprechend dem anzuwendenden Algorithmus dekomprimiert. Anschließend kann die dekomprimierte Nachricht zur Anzeige gebracht werden. Sind Textnachrichten zu senden, werden diese vor der eigentlichen Übertragung zum SIM geleitet, wo sie gegebenenfalls komprimiert werden. Dies kann z.B. abhängig von der Anzahl der Zeichen geschehen; bei geringen Datenmengen könnte die Komprimierung auch entfallen.

Die erfindungsgemäße Lösung unterscheidet sich von bekannten Ansätzen zur Datenkompression vor allem dadurch, daß die Komprimierung oder Dekomprimierung nicht durch das Endgerät selbst, sondern durch das austauschbare Teilnehmeridentitätsmodul ausgeführt wird. Dadurch wird eine größtmögliche Flexibilität erreicht.

Das bedeutet nicht unbedingt, daß sämtliche bei der Komprimierung oder Dekomprimierung benötigten oder mitwirkenden Funktionen oder Funktionseinheiten auf dem Teilnehmeridentitätsmodul realisiert werden müssen. Die Vorteile der Erfindung ergeben sich immer dann, wenn man die für ein verwendetes oder zu verwendendes Kompressions- oder Dekompressionsverfahren oder für mehrere solcher Verfahren charakteristischen Funktionen oder Funktionseinheiten auf dem Teilnehmeridentitätsmodul realisiert. Solche für ein Verfahren charakteristischen Funktionen oder Funktionseinheiten können Algorithmen oder sie implementierende Softwaremodule sein. Ferner kann es sich hier um Parametersätze, wie z.B. sprachen- oder länderabhängige Tabellen handeln.

Allgemeine, im Kommunikationsendgerät ohnehin vorhandene und für ein Kompressionsverfahren oder Dekompressionsverfahren nicht spezifische Fuunktionen oder Funktionseinheiten wie z.B. Prozessoren, Speichereinheiten, etc. müssen dagegen nicht Bestandteil des Teilnehmeridentitätsmoduls sein. Die Gesamtheit aller zum Verfahrensablauf benötigten Funktionen kann gleichwohl über die grenzen des Teilnehmeridentitätsmoduls hinweg zusammenarbeiten.

Wird der Teilnehmeridentätsmodul ausgewechselt, werden mit ihm die für ein spezielles Datenkompressions- oder Dekompressionsverfahren charakteristischen Funktionen, Parameter oder ähnliches ausgewechselt. Dadurch ist es möglich, je nach installiertem Typ des Teilnehmeridentätsmoduls unterschiedliche Datenkompressions- oder Dekompressionsverfahren im Zusammenhang mit diesem Endgerät zu verwenden.

## Patentansprüche

1. Kommunikationsendgerät (KE) mit Mitteln zum Empfang (RM) und zum Senden (SM) von Nachrichten und Mitteln zur Interaktion mit einem durch einen Benutzer austauschbaren Teilnehmeridentitätsmodul (SIM), wobei das Teilnehmeridentitätsmodul Funktionen (DKF) zur Komprimierung und bzw. oder Dekomprimierung von empfangenen oder zu sendenden Nachrichten umfaßt.

2. Kommunikationsendgerät nach Anspruch 1, **dadurch gekennzeichnet, daß** Funktionen zur Komprimierung und bzw. oder Dekomprimierung von empfangenen oder zu sendenden Nachrichten zwischen dem Endgerät und dem Teilnehmeridentitätsmodul in einer Weise aufgeteilt sind, daß zwei unterschiedliche Teilnehmeridentitätsmodule in Verbindung mit demselben Endgerät die Ausführung zweier unterschiedlicher Verfahren zur Komprimierung und bzw. oder Dekomprimierung von Nachrichten ermöglichen können.

3. Kommunikationsendgerät nach Anspruch 2, **dadurch gekennzeichnet, daß** sämtliche Funktionen zur Komprimierung und bzw. oder Dekomprimierung von empfangenen oder zu sendenden Nachrichten durch Einrichtungen oder Softwareobjekte realisiert werden, die dem Teilnehmeridentitätsmodul und nicht dem Endgerät zugeordnet sind.

4. Verfahren zur Dekomprimierung einer empfangenen Nachricht in einem Kommunikationsendgerät, bei dem eine Einrichtung des Endgerätes anhand eines Merkmals dieser Nachricht erkennt, daß es sich um eine komprimierte Nachricht handelt, und bei dem eine Einrichtung (IM) des Endgerätes diese Nachricht an das Teilnehmeridentitätsmodul (SIM) zur Dekomprimierung weitergibt.

5. Verfahren zur Komprimierung einer zu sendenen Nachricht in einem Kommunikationsendgerät, bei dem eine zu sendende Nachricht zur Komprimierung an das Teilnehmeridentitätsmodul weitergegeben, dort mit Hilfe von Funktionen (DKF), die dem Teilnehmeridentitätsmodul (SIM) zugeordnet sind, komprimiert und nach der Komprimierung an das Endgerät zum Senden zurückgegeben wird.

## Claims

1. Communications terminal (KE) having means for receiving (RM) and for transmitting (SM) messages and means for interacting with a subscriber identity module (SIM), the subscriber identity module comprising functions (DKF) for compressing and/or decompressing received messages or messages which are to be transmitted.

2. Communications terminal according to Claim 1, **characterized in that** functions for compressing and/or decompressing received messages or messages which are to be transmitted are divided between the terminal and the subscriber identity module in such a way that two different subscriber identity modules can permit two different methods for compressing and/or decompressing messages to be carried out in conjunction with the same terminal.

3. Communications terminal according to Claim 2, **characterized in that** all the functions for compressing and/or decompressing received messages or messages to be transmitted are carried out by devices or software objects which are assigned to the subscriber identity module and not to the terminal.

4. Method for decompressing a received message in a telecommunications terminal, in which a device of the terminal detects, by means of a feature of this message, that the message is a compressed message, and in which a device (IM) of the terminal passes on this message to the subscriber identity module (SIM) for decompression.

5. Method for compressing a message to be transmitted in a communications terminal in which a message to be transmitted is passed on to the subscriber identity module for compression, compressed there using functions (DKF) which are assigned to the subscriber identity module (SIM), and after the compression are sent back to the terminal for transmission.

## Revendications

1. Terminal de communication (KE) ayant des moyens destinés à la réception (RM) et à l'émission (SM) de messages et des moyens destinés à l'interaction avec un module d'identification des abonnés (SIM), qui peut être interchangé par l'utilisateur, le module d'identification des abonnés renfermant des fonctions (DKF) destinées à la compression et/ou à la décompression de messages reçus ou à émettre.

2. Terminal de communication selon la revendication 1 **caractérisé par le fait que** des fonctions destinées à la compression et/ou à la décompression de messages reçus ou à émettre sont réparties entre le terminal et le module d'identification des abonnés de telle manière que deux modules différents d'identification des abonnés peuvent permettre, en liaison avec le même terminal, l'exécution de deux procédés différents de compression et/ou de décompression de messages.

3. Terminal de communication selon la revendication 2 **caractérisé par le fait que** toutes les fonctions de compression et/ou de décompression de messages reçus ou à émettre sont réalisées par des dispositifs ou des paquets de logiciel affectés au module d'identification des abonnés et non au terminal.

4. Procédé destiné à la décompression d'un message reçu dans un terminal de communication dans lequel un dispositif du terminal reconnaît, à l'aide d'une caractéristique de ce message, qu'il s'agit d'un message comprimé, et dans lequel un dispositif (IM) du terminal remet ce message au module d'identification des abonnés (SIM) en vue de sa décompression.

5. Procédé destiné à la compression d'un message à émettre dans un terminal de communication dans lequel un message à émettre est remis, en vue de sa compression, au module d'identification des abonnés, y est comprimé à l'aide de fonctions (DKF) qui sont affectées au module d'identification des abonnés (SIM), et est redonné, après la compression, au terminal en vue de son émission.
